# EUROPÄISCHE PATENTSCHRIFT

(11) **EP 4 295 426 B1**
(45) Veröffentlichungstag und Bekanntmachung des Hinweises auf die Patenterteilung: **18.06.2025**
(21) Anmeldenummer: 21728479.3
(22) Anmeldetag: 18.05.2021
(51) Int. Cl.: H01M 8/0213, H01M 8/0267, H01M 8/0273, H01M 8/0286

(54) **BIPOLARPLATTE FÜR EINE BRENNSTOFFZELLE ODER EINE FLUSSBATTERIE MIT EINEM HYDROPHOBEN OBERFLÄCHENBEREICH UND VERFAHREN ZUM FERTIGEN DERSELBEN**
FLOW FIELD PLATE FOR A FUEL CELL OR A REDOX FLOW BATTERY, HAVING A HYDROPHOBIC SURFACE REGION, AND METHOD FOR PRODUCING SAID FLOW FIELD PLATE
PLAQUE BIPOLAIRE POUR UNE PILE À COMBUSTIBLE OU UNE BATTERIE À FLUX REDOX, AYANT UNE RÉGION DE SURFACE HYDROPHOBE, ET PROCÉDÉ DE PRODUCTION DE LADITE PLAQUE BIPOLAIRE

(43) Veröffentlichungstag der Anmeldung: 27.12.2023
(73) Patentinhaber: Schunk Kohlenstofftechnik GmbH, 35452 Heuchelheim (DE)
(72) Erfinder: VOORMANN, Hauke, 35440 Linden (DE); WITTKA, Dominik, 35649 Bischoffen (DE)
(74) Vertreter: Qip Patent & Recht Dr. Kuehn & Partner mbB
(86) Internationale Anmeldenummer: PCT/EP2021/063204
(87) Internationale Veröffentlichungsnummer: WO 2022/242837

(56) Entgegenhaltungen:
- DE-A1- 102009 020 224
- US-A- 6 165 634
- US-A1- 2007 190 401

## Beschreibung

### GEBIET DER ERFINDUNG

Die vorliegende Erfindung betrifft eine Bipolarplatte einer Brennstoffzelle oder einer Flussbatterie sowie ein Verfahren zum Fertigen einer solchen Bipolarplatte.

### HINTERGRUND DER ERFINDUNG

Bipolarplatten sollen für Brennstoffzellen, die zu Stapeln geschichtet einen Kern eines Brennstoffzellensystems bilden, mehrere verschiedene Aufgaben erfüllen. Einerseits sollen sie benachbarte Brennstoffzellen miteinander verbinden, d.h. eine Anode einer Zelle mit einer Kathode einer benachbarten Zelle physikalisch und elektrisch leitend verbinden. Andererseits soll über eine Fläche der Bipolarplatte eine Gasverteilung hin zu Reaktionsräumen innerhalb der Brennstoffzellen erfolgen können, das heißt die Bipolarplatte soll Reaktionsgase in Reaktionszonen leiten. Die Bipolarplatte weist hierzu typischerweise auf beiden Seiten Strömungsprofile (sogenannte Flowfields) auf, die gefräst, urgeformt oder umgeformt sein können und durch die auf der einen Seite Wasserstoff strömt und auf der anderen Seite Luft zugeführt wird. Die Bipolarplatte regelt hierbei im Allgemeinen auch eine Abfuhr von Wasserdampf beziehungsweise eine Abgabe von thermischer und elektrischer Energie. Außerdem soll die Bipolarplatte ferner für eine Gastrennung zwischen angrenzenden Zellen, für eine Dichtung nach außen und gegebenenfalls für eine Kühlung sorgen.

Bipolarplatten weisen häufig Kanäle auf, die sich durch ein Inneres eines Substrats der Bipolarplatte erstrecken. Solche Kanäle können beispielsweise während der Fertigung der Bipolarplatte bestimmte Aufgaben erfüllen. Beispielsweise kann innerhalb solcher Kanäle ein Haftmittel aufgenommen sein, mithilfe dessen zwei die Bipolarplatte bildende Teilsubstrate miteinander verbunden werden. Kanäle können alternativ auch zur Implementierung anderer Funktionalitäten vorgesehen sein.

Es wurde beobachtet, dass es beim Betrieb von Brennstoffzellen oder Flussbatterien in bestimmten Betriebsbedingungen, insbesondere bei oder nach niedrigen Temperaturen, zu Problemen kommen kann. Es wird vermutet, dass diese Probleme im Zusammenhang mit der in der Brennstoffzelle bzw. der Flussbatterie eingesetzten Bipolarplatte stehen.

DE 10 2009 020 224 A1 beschreibt eine Bipolarplatte mit Wassermanagement-Merkmalen an Einlass und Auslass. US 2007/0190401 A1 beschreibt Anodenelektroden für Direkt-Oxidation-Brennstoffzellen und Systeme, die mit konzentriertem flüssigem Brennstoff arbeiten. US 6,165,634 beschreibt eine Brennstoffzelle mit verbesserter Dichtung zwischen individuellen Membrananordnungen und Plattenanordnungen.

### ZUSAMMENFASSUNG DER ERFINDUNG UND VORTEILHAFTER AUSFÜHRUNGSFORMEN

Es kann ein Bedarf an einer Bipolarplatte bzw. einer damit ausgestatteten Brennstoffzelle oder Flussbatterie bestehen, welche zuverlässig betrieben werden kann, insbesondere auch unter Betriebsbedingungen bei oder nach niedrigen Temperaturen. Insbesondere kann ein Bedarf an einer Bipolarplatte bestehen, welche einfach aufgebaut ist, kostengünstig hergestellt werden kann und/oder besonders robust betrieben werden kann. Ferner kann ein Bedarf an einem Verfahren zum Fertigen einer solchen Bipolarplatte bestehen. Insbesondere kann ein Bedarf an einem Verfahren bestehen, mittels dessen eine Bipolarplatte kostengünstig, mit geringem Aufwand und/oder zuverlässig gefertigt werden kann.

Einem solchen Bedarf kann mit dem Gegenstand der unabhängigen Ansprüche entsprochen werden. Vorteilhafte Ausführungsformen sind in den abhängigen Ansprüchen definiert sowie in der nachfolgenden Beschreibung beschrieben und in den Figuren dargestellt.

Ein erster Aspekt der Erfindung betrifft eine Bipolarplatte für eine Brennstoffzelle oder eine Flussbatterie, wobei die Bipolarplatte ein Substrat und einen Kanal, welcher sich von einem Kanaleingang an einer Oberfläche des Substrats in ein Inneres des Substrats erstreckt, aufweist. Eine Oberfläche des Substrats ist dabei in einem ersten Bereich innerhalb des Kanals angrenzend an den Kanaleingang stärker hydrophob ausgebildet als in einem zweiten Bereich. Der erste Bereich umgibt dabei den Kanaleingang ringförmig.

Ein zweiter Aspekt der Erfindung betrifft ein Verfahren zum Fertigen einer Bipolarplatte für eine Brennstoffzelle oder eine Flussbatterie, wobei das Verfahren zumindest folgende Schritte umfasst:
Bereitstellen eines Substrats mit einer Struktur derart, dass sich in der gefertigten Bipolarplatte innerhalb des Substrats ein Kanal erstreckt, welcher sich von einem Kanaleingang an einer Oberfläche des Substrats in ein Inneres des Substrats erstreckt, und
Bearbeiten der Oberfläche des Substrats in einem ersten Bereich innerhalb des Kanals angrenzend an den Kanaleingang derart, dass die Oberfläche des Substrats in dem ersten Bereich stärker hydrophob ist als die Oberfläche des Substrats in einem zweiten Bereich.

Der erste Bereich umgibt dabei den Kanaleingang ringförmig.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden.

Kurz und grob zusammengefasst kann ein Grundgedanke zu der hierin beschriebenen Idee darin gesehen werden, dass erkannt wurde, dass Probleme, wie sie beim Betrieb von Brennstoffzellen bzw. Flussbatterien insbesondere bei oder nach niedrigen Temperaturen beobachtet wurden, darauf zurückzuführen sein könnten, dass Wasser in Kanäle der Bipolarplatte eingedrungen ist oder Wasserdampf in diesen Kanälen kondensiert ist und dann gefroren ist und dabei aufgrund hierbei auftretender thermisch bedingter Expansion Kräfte bzw. Schäden in der Bipolarplatte bewirkt. Während bisher angestrebt wurde, ein Eindringen von Wasser oder Wasserdampf durch Dichtungsmaßnahmen in oder an den Kanälen zu verhindern, wird hierin alternativ vorgeschlagen, zumindest einen Teil der Oberfläche des Substrats angrenzend an den Kanaleingang und vorzugsweise auch freiliegende Bereiche der Oberfläche innerhalb des Kanals gezielt stärker hydrophob auszubilden, als dies für andere Teile der Oberfläche des Substrats gilt. Hierdurch soll verhindert werden können, dass Wasser in freiliegende Bereiche in dem Kanal eindringt und/oder sich dort durch Kondensation angelagert.

Nachfolgend werden mögliche Details zu Ausgestaltungen der hierin vorgeschlagenen Bipolarplatte und des Fertigungsverfahrens erläutert.

Typischerweise ist das Substrat, mit dem die Bipolarplatte ausgebildet wird, plattenförmig. Dementsprechend weist das Substrat eine Höhe und eine Breite auf, die beide deutlich größer sind als eine Dicke des Substrats, d.h. welche die Dicke des Substrats beispielsweise um mehr als ein Zehnfaches übersteigen. An einer außenliegenden Oberfläche kann das Substrat Strukturen und/oder Texturen aufweisen, um beispielsweise Reaktionsfluide gezielt entlang vorgegebener Pfade an der Substratoberfläche entlang zu leiten und/oder um die Substratoberfläche zu vergrößern.

Das Substrat besteht typischerweise aus einem elektrisch sehr gut leitfähigen Material oder ist zumindest an dessen Oberfläche mit einem solchen Material versehen.

Beispielsweise kann die Bipolarplatte bzw. deren Substrat gemäß einer Ausführungsform mit einem graphithaltigen Werkstoff ausgebildet sein bzw. aus einem solchen Werkstoff bestehen.

Graphit bietet als kohlenstoffhaltiges Material für viele Anwendungszwecke vorteilhafte Eigenschaften. Für die Verwendung beispielsweise in Bipolarplatten bietet Graphit eine sehr hohe elektrische Leitfähigkeit zusammen mit einer hohen thermischen Belastbarkeit und einer ausreichend hohen mechanischen Festigkeit. Für Bipolarplatten werden unter anderem graphithaltige Werkstoffe eingesetzt, bei denen Graphitpartikel in einer Polymermatrix eingebettet sind. Die Graphitpartikel geben dem Werkstoff gewünschte elektrische und/oder thermische Eigenschaften. Die Polymermatrix dient unter anderem dazu, die Graphitpartikel mechanisch zusammen zu halten. Die Polymermatrix kann beispielsweise ein Epoxidharz enthalten. Die Graphitpartikel wirken somit als Füllstoff und die Polymermatrix als eine Art Bindemittel. In dem Werkstoffgemisch können neben Graphitpartikeln und Polymeren noch weitere Bestandteile enthalten sein, beispielsweise in Form von Ruß, weiteren Bindemitteln oder ähnlichem. Vorteilhafterweise kann der graphithaltige Werkstoff einen Graphitanteil von mindestens 60 %, vorzugsweise mindestens 70 % oder sogar mindestens 80 %, aufweisen. Die Prozentangaben können sich hierbei auf das Volumen beziehen. Aufgrund des hohen Graphitanteils kann der Werkstoff unter anderem eine sehr gute elektrische Leitfähigkeit bieten, wie sie insbesondere bei einer Verwendung zur Ausbildung von Bipolarplatten vorteilhaft ist. Beispiele und mögliche Eigenschaften von graphithaltigen Werkstoffen sind unter anderem in der früheren Patentanmeldung PCT/EP2020/078489 der Anmelderin beschrieben. Die dort beschriebenen graphithaltigen Werkstoffe können in Ausführungsformen der hierin beschriebenen Bipolarplatte eingesetzt und an ihrer Oberfläche lokal hydrophob ausgebildet werden. Der Inhalt der früheren Patentanmeldung wird hierin durch Inbezugnahme vollumfänglich aufgenommen.

In dem Substrat ist zumindest ein innenliegender Kanal, d.h. ein vorzugsweise länglicher Hohlraum, ausgebildet. Der Kanal erstreckt sich von einem Kanaleingang an der Oberfläche des Substrats in das Innere des Substrats hinein. Anders ausgedrückt mündet der Kanal an dem Kanaleingang in ein das Substrat umgebendes Volumen bzw. eine dort vorhandene Atmosphäre. Der Kanal erstreckt sich von dem Kanaleingang bis ins Innere des Substrats und möglicherweise bis hin zu einem Kanalausgang an einem anderen Bereich der Oberfläche des Substrats. Der Kanal kann im Vergleich zur Dicke des Substrats kleine Querschnittsabmessungen aufweisen. Beispielsweise können die Querschnittsabmessungen kleiner als eine Hälfte, vorzugsweise kleiner als ein Drittel der Dicke des Substrats sein. Der Kanal kann im Querschnitt rund, rechteckig oder mit einer beliebigen anderen Geometrie ausgebildet sein. Der Kanal kann entlang seines gesamten Umfangs von Material des Substrats der Bipolarplatte umgeben sein. Alternativ kann ein Teilbereich des Umfangs von anderem Material, beispielsweise von einem innerhalb des Kanals eingebrachten Dicht-, Haft- oder Klebstoffs bedeckt sein.

Herkömmlich wurde versucht, Kanäle in dem Substrat einer Bipolarplatte möglichst derart abzudichten, dass keine Feuchtigkeit eindringen kann. Hierzu wurde beispielsweise ein Dichtmittel in dem Kanal eingebracht, welches den Kanal zumindest an seinem Kanaleingang, vorzugsweise entlang des gesamten Volumens des Kanals, ausfüllt und abdichtet.

Allerdings wurde beobachtet, dass es beim Fertigen der Bipolarplatte schwierig sein kann, den Kanal bzw. dessen Kanaleingang zuverlässig abzudichten. Beispielsweise kann es aufwendig sein, ein Dichtmittel derart zu applizieren, dass der Kanal vollständig ausgefüllt ist oder zumindest dessen Kanaleingang ausreichend dicht verschlossen ist. Hierbei können meist nur sehr kleine Toleranzfenster zulässig sein, was instabile Fertigungsprozesse bedingen kann. Ferner muss oft beispielsweise eine übermäßig große Menge an Dichtmittel appliziert werden, sodass überschüssiges Dichtmittel am Kanaleingang austreten kann und der Kanaleingang dabei ausreichend abgedichtet wird. Allerdings bleibt das überschüssige Dichtmittel in diesem Fall funktionslos und bedingt somit einen übermäßig großen Verbrauch an Dichtmittel. Außerdem kann ein Nacharbeiten und/oder eine Inspektion des abgedichteten Kanals und/oder ein Reinigen von eingesetzten Werkzeugen erforderlich sein. Außerdem können Materialanforderungen an das Dichtmittel im Widerspruch zu technischen Anforderungen an die Bipolarplatte stehen. Ferner kann ein Risiko bestehen, dass beispielsweise aufgrund von thermischen Beanspruchungen und damit einhergehenden Formveränderungen mit der Zeit Undichtigkeiten zwischen dem Kanal und dem Dichtmittel entstehen.

Um die vorgenannten Probleme bzw. Nachteile zumindest teilweise zu überwinden, wird hierin ein alternativer Ansatz beschrieben, um ein Eindringen bzw. Anlagern von Feuchtigkeit innerhalb des Kanals zu verhindern. Dabei wird ein Teilbereich der Oberfläche des Substrats im Inneren des Kanals gezielt derart behandelt bzw. gezielt derart ausgebildet, dass sich dort eine stärkere hydrophobe Eigenschaft einstellt als in anderen Bereichen der Oberfläche des Substrats, insbesondere als den anderen Bereichen der Oberfläche des Substrats innerhalb des Kanals bzw. angrenzend an den Kanal. Dieser verstärkt hydrophob ausgebildete Teilbereich wird hierin als erster Bereich bezeichnet. Bereiche mit geringerer Hydrophobie werden hierin als zweite Bereiche oder dritte Bereiche bezeichnet. Der zweite Bereich bzw. der dritte Bereich kann direkt an den ersten Bereich angrenzen.

In dem ersten Bereich kann die Oberfläche des Substrats insbesondere derart behandelt sein, dass ein Kontaktwinkel, den ein Wassertropfen mit der Oberfläche bildet, größer als 40°, vorzugsweise größer als 60° oder sogar größer als 80° ist. Insbesondere kann die Oberfläche des Substrats in dem ersten Bereich superhydrophob ausgebildet sein, d.h. ein Kontaktwinkel kann größer als 90° sein. Insbesondere kann der Kontaktwinkel in dem ersten Bereich beispielsweise mehr als 5°, vorzugsweise mehr als 10°, mehr als 20° oder sogar mehr als 30° größer sein als in dem zweiten Bereich.

Aufgrund der verstärkt hydrophoben Eigenschaft der Oberfläche des Substrats in dem an den Kanaleingang angrenzenden ersten Bereich kann ein Risiko, dass Flüssigkeit, insbesondere Wasser, über den Kanaleingang in dem Kanal eindringt, massiv verringert werden.

Dabei kann es erfindungsgemäß vorteilhaft sein, dass der erste Bereich den Kanaleingang ringförmig umgibt. Anders ausgedrückt kann vorzugsweise die gesamte Oberfläche, die den Kanaleingang an dessen Umfang umgibt, gezielt verstärkt hydrophob ausgebildet sein. Das Risiko eines Eindringens von Flüssigkeit kann hierdurch weiter minimiert werden. Der hydrophob ausgebildete Kanaleingang kann hierbei wie eine Barriere für Flüssigkeit wirken und verhindern, dass Flüssigkeit beispielsweise aufgrund von Kapillarkräften ins Innere des Kanals gelangen kann.

Ferner kann gemäß einer Ausführungsform der erste Bereich Teile der Oberfläche des Substrats innerhalb des Kanals umfassen, welche in Gaskommunikation mit dem Kanaleingang verbunden sind. Mit anderen Worten kann sich der erste Bereich ergänzend zu einem Teilbereich, in dem dieser an den Kanaleingang angrenzt, weiter bis ins Innere des Kanals erstrecken und dort insbesondere Teile der Oberfläche des Substrats umfassen, zu denen Gas vom Kanaleingang kommend gelangen kann. Eine Gaskommunikation zwischen dem Kanaleingang und dem weiter im Inneren des Kanals gelegenen Teilbereich des ersten Bereichs kann hierbei durch Gasströmung und/oder Gasdiffusion erfolgen.

Indem der stark hydrophobe erste Bereich auch Teile der Oberfläche des Substrats innerhalb des Kanals umfasst, kann unter anderem auch ein Risiko gesenkt werden, dass Dampf, insbesondere Wasserdampf, durch den Kanaleingang ins Innere des Kanals gelangt und dort durch Kondensation Flüssigkeitstropfen bildet.

Gemäß einer Ausführungsform ist das Substrat der Bipolarplatte aus zwei plattenförmigen Teilsubstraten zusammengesetzt. Die zwei Teilsubstrate sind dabei entlang einer Klebefläche miteinander verklebt. Angrenzend an die Klebefläche erstreckt sich ein Überlaufkanal. Der erste Bereich erstreckt sich hierbei zumindest entlang von Teilen des Überlaufkanals. Der zweite Bereich erstreckt sich zumindest entlang von Teilen der Klebefläche. Beim Fertigen der Bipolarplatte können die beiden plattenförmigen Teilsubstrate zunächst als separate Bauelemente bereitgestellt werden und anschließend miteinander entlang der Klebefläche verklebt werden.

Mit anderen Worten kann die Bipolarplatte zweiteilig oder mehrteilig aufgebaut sein. Plattenförmige Teilsubstrate können zunächst als einzelne Bauteile vorgefertigt werden. Dabei können darin an einer Oberfläche Strukturen in Form von beispielsweise Vertiefungen, Nuten oder ähnlichem ausgebildet werden, die nach dem Zusammensetzen zweier Teilsubstrate Kanäle in dem dabei entstehenden Gesamtsubstrat bilden.

Diese Strukturen können derart ausgebildet sein, dass Klebeflächen gebildet werden, entlang derer zwei benachbarte, zusammengestapelte Teilsubstrate miteinander verklebt werden können. Die Klebeflächen der gestapelten Teilsubstrate können derart ausgebildet sein, dass sie einander gegenüberliegen und sehr eng beieinander und vorzugsweise parallel zueinander verlaufen. Beim Verkleben der beiden Teilsubstrate kann ein Haftmittel auf eine oder beide der einander gegenüberliegenden Klebeflächen aufgetragen werden.

Die Strukturen können ferner derart ausgebildet sein, dass neben den Klebeflächen zumindest ein Überlaufkanal gebildet wird. Im Bereich des Überlaufkanals kann eine Vertiefung in der Oberfläche eines Teilsubstrats größer sein als im Bereich der Klebeflächen. Dementsprechend kann eine Oberfläche des Überlaufkanals eines Teilsubstrats von einer gegenüberliegenden Oberfläche eines darüber gestapelten zweiten Teilsubstrats weiter beabstandet sein, als dies der Fall für gegenüberliegende Klebeflächen ist.

Beim Verkleben der beiden Teilsubstrate wird das Haftmittel zunächst vorzugsweise ausschließlich auf eine oder beide der Klebeflächen aufgetragen, nicht jedoch in den Überlaufkanal. Allerdings kann das Haftmittel anschließend bei einem Zusammenpressen der beiden Teilsubstrate seitlich bis in den Überlaufkanal strömen und diesen zumindest teilweise ausfüllen. Der Überlaufkanal kann somit überschüssiges Haftmittel aufnehmen. Dementsprechend können die beiden Teilsubstrate effizient miteinander verklebt werden, ohne dass überschüssiges Haftmittel ein enges Zusammenpressen der Teilsubstrate behindern würde. Gegebenenfalls können Überlaufkanäle an beiden entgegengesetzten Seiten von Klebeflächen angeordnet sein.

Da die Klebeflächen für eine Verklebung der beiden Teilsubstrate dienen sollen und das Haftmittel somit an diesen Klebeflächen gut anhaften soll, kann angestrebt werden, diese Klebeflächen als zweite Bereiche mit einer relativ geringen hydrophoben Eigenschaft oder sogar einer hydrophilen Eigenschaft auszubilden. Dementsprechend kann sich das Haftmittel, das im Allgemeinen in einem flüssigen bzw. fließfähigen Zustand verarbeitet wird, großflächig an den Klebeflächen anlagern und eine gut haftende stoffschlüssige Verbindung mit den Klebeflächen eingehen.

Im Gegensatz hierzu kann es angestrebt werden, eine Oberfläche des Überlaufkanals mit stärker hydrophoben Eigenschaften auszubilden. Zwar kann ein Teil dieser Oberfläche letztendlich auch von Haftmittel, welches seitlich zwischen den Klebeflächen herausquillt, bedeckt sein. Da das Volumen des Überlaufkanals jedoch vorzugsweise so gewählt wird, dass dieser nicht vollständig mit Haftmittel gefüllt wird, kann zumindest ein Teil der Oberfläche des Überlaufkanals freiliegend verbleiben. Um zu vermeiden, dass sich an diesen Teil der Oberfläche Feuchtigkeit anlagert, kann dieser als erster Bereich mit erhöhter Hydrophobie ausgebildet werden.

Dementsprechend kann gemäß einer Ausführungsform bei der fertiggestellten Bipolarplatte gemäß einer Ausführungsform der Kanal teilweise mit einem fließfähig verarbeitbaren Haftmittel gefüllt sein. Der erste Bereich bildet hierbei einen Anteil der Oberfläche innerhalb des Kanals des Substrats, in dem das Haftmittel nicht das Substrat kontaktiert. Der zweite Bereich des Substrats bildet einen Anteil der Oberfläche innerhalb des Kanals des Substrats, in dem das Haftmittel das Substrat kontaktiert.

Mit anderen Worten kann die beispielsweise aus zwei Teilsubstraten zusammengesetzte Bipolarplatte über einen Kanal verfügen, der teilweise mit einem Haftmittel gefüllt ist. Das Haftmittel kann während seiner Verarbeitung fließfähig sein und anschließend vernetzen bzw. sich verfestigen. Dementsprechend kann das Haftmittel an den beiden Teilsubstraten an Klebeflächen anhaften und die beiden Teilsubstrate miteinander stoffschlüssig verbinden. Ein Anteil der Oberfläche der Teilsubstrate innerhalb des Kanals, in dem das Haftmittel an den Klebeflächen anliegt, kann hierbei vorzugsweise als zweiter Bereich mit geringer hydrophober Eigenschaft ausgebildet sein. Im Gegensatz hierzu kann ein Anteil der Oberflächen der Teilsubstrate, die nach einem solchen Verklebungsvorgang nicht von dem Haftmittel bedeckt werden, als erster Bereich mit starker hydrophober Eigenschaften ausgebildet sein.

Vorzugsweise erstreckt sich hierbei der erste Bereich innerhalb des Kanals entlang einer gesamten Oberfläche des Substrats, in dem das Haftmittel das Substrat nicht kontaktiert.

Anders ausgedrückt ist der erste Bereich innerhalb des Kanals vorzugsweise derart dimensioniert und angeordnet, dass nach einer Verklebung der beiden Teilsubstrate mithilfe des Haftmittel alle Oberflächenbereiche des Substrats innerhalb des Kanals, die nicht von dem Haftmittel bedeckt werden, stark hydrophob ausgebildet sind. Hierdurch kann unter anderem bewirkt werden, dass innerhalb des Kanals keine schwach hydrophoben Oberflächen verbleiben, an denen zum Beispiel eindringender Wasserdampf kondensieren könnte.

Generell sind verschiedene Möglichkeiten bekannt, Oberflächen eines Substrats derart zu behandeln, dass diese hydrophobere Eigenschaften erhalten. Beispielsweise können Oberflächen mit einem Material beschichtet werden, welches stark hydrophob ist, beispielsweise aufgrund darin fehlender polarer Moleküle und Gruppen. Im Gegenzug sind verschiedene Möglichkeiten bekannt, Oberflächen eines Substrats geeignet zu behandeln, um ihnen weniger hydrophobe bzw. hydrophile Eigenschaften zu verleihen. Beispielsweise können Oberflächen mit einem Material beschichtet werden, welches aufgrund darin enthaltener polarer Moleküle und Gruppen zumindest eine gewisse Hydrophilie aufweist. Alternativ können Oberflächen gezielt oxidiert werden, beispielsweise indem diese mit Fluor oder Schwefeltrioxid behandelt werden. Auch eine Plasmabehandlung oder eine Coronabehandlung kann zu schwächer hydrophoben bzw. hydrophilen Oberflächeneigenschaften führen.

Gemäß einer Ausführungsform kann der hierin beschriebene erste Bereich der Substratoberfläche durch lokales Bestrahlen der Oberfläche des Substrats mittels eines Lasers bearbeitet werden, um ihm verstärkt hydrophobe Eigenschaften zu geben.

Ein Laserstrahl kann hierbei gezielt auf den ersten Bereich der Substratoberfläche gerichtet werden. Der zweite Bereich der Substratoberfläche kann unbearbeitet bleiben oder in einer anderen Weise bearbeitet werden, um ihm weniger hydrophobe Eigenschaften zu verleihen. Durch den Einsatz eines Lasers können der erste und der zweite Bereich der Substratoberfläche gezielt lokal mit unterschiedlich starken hydrophoben Eigenschaften ausgebildet werden. Dabei kann der Laserstrahl auch gezielt auf sehr kleinflächige Bereiche gerichtet werden. Im Gegensatz hierzu kann es verfahrenstechnisch schwierig sein, kleinflächige Bereiche mithilfe anderer Technologien wie beispielsweise einem Beschichten mit einem hydrophoben Material zu behandeln.

Dementsprechend kann gemäß einer Ausführungsform bei der fertig gestellten Bipolarplatte der erste Bereich mittels eines Lasers lokal bearbeitet sein, um die gewünschte lokal gesteigerte Hydrophobie auszubilden.

Der erste Bereich weist dabei aufgrund der Bestrahlung mit dem Laserstrahl typischerweise charakteristische mikroskopische Eigenschaften auf. Beispielsweise kann eine Region, die mit dem Laserstrahl behandelt wurde, kurzzeitig aufgeschmolzen worden sein und beim anschließenden Erstarren eine für die Laserbehandlung charakteristische Struktur und/oder Zusammensetzung zu erhalten. Alternativ oder ergänzend kann mithilfe eines hochenergetischen Laserstrahls Material aus der Oberfläche lokal entfernt werden, das heißt ablatiert werden. Dabei kann oberflächennah ein Plasma erzeugt werden und Material daraufhin verdampft werden. Ergänzend oder alternativ kann Material durch thermische Einflüsse, welche aufgrund der Laserbestrahlung bewirkt werden, chemisch verändert, d.h. "gecracked", werden und daraufhin beispielsweise als Kohlenstoffstruktur zurückbleiben bzw. in die Gasphase übergehen. Insgesamt kann sich durch die Bearbeitung mit dem Laser eine Oberflächenstruktur bilden, die rauer sein kann als in Bereichen, die nicht mit dem Laser bearbeitet wurden. Alternativ oder ergänzend kann sich eine Volumenstruktur, insbesondere beispielsweise eine Kristallstruktur, des mit dem Laser bearbeiteten Materials in einer für die Laserbearbeitung typischen Weise verändern.

Der Laser kann Eigenschaften aufweisen, die es erlauben, Material des Substrats an der laserbearbeiteten Oberfläche aufzuschmelzen oder zu ablatieren. Der Laser kann z.B. ein gepulster Laser sein, insbesondere ein Kurzpulslaser, der in der Lage ist, Laserpulse mit Dauern im Bereich von Nanosekunden oder weniger zu emittieren. Der Laser kann z.B. ein Infrarotlaser sein.

Gemäß einer Ausführungsform kann der erste Bereich innerhalb des Kanals derart bearbeitet werden, dass eine Oberflächentextur ausgebildet wird, die einen Lotuseffekt bewirkt.

Die Bildung einer komplexen mikroskopischen und nanoskopischen Oberflächenstruktur kann dazu führen, dass Flüssigkeitstropfen mit einer Oberfläche lediglich eine sehr geringe Kontaktfläche bilden können und daher an der texturierten Oberfläche abperlen. Dieser Effekt wird auch als Lotuseffekt bezeichnet und kann eine stark hydrophobe oder sogar eine superhydrophobe Eigenschaft einer Oberfläche darstellen. Die Oberflächentextur kann hierbei über eine Vielzahl winziger und eng benachbarter Vertiefungen und/oder Gräben gebildet sein.

Beispielsweise kann die Oberflächentextur erzeugt werden, indem der Strahl eines Lasers entlang regelmäßiger oder unregelmäßiger Pfade über die zu texturierende Oberfläche gescannt wird und dabei Material an der Oberfläche kurzzeitig aufschmilzt, aufwirft und/oder ablatiert.

Gemäß einer Ausführungsform kann der gleiche Laser, der eingesetzt wird, um die Oberfläche des Substrats in dem ersten Bereich zu bearbeiten und stärker hydrophob auszubilden, auch dazu eingesetzt werden, die Oberfläche des Substrats in dem zweiten Bereich und/oder in einem dritten Bereich der Oberfläche zu bearbeiten.

Es wurde erkannt, dass bei jeweils geeignet angepasster Prozessführung mit einer Laserbearbeitung sowohl eine Verstärkung hydrophober Eigenschaften als auch eine Schwächung hydrophober Eigenschaften einer Oberfläche bewirkt werden können. Dementsprechend kann es vorteilhaft sein, die an dem Substrat der Bipolarplatte vorzusehenden ersten und zweiten Bereiche unterschiedlicher Hydrophobie gezielt durch lokales Bearbeiten mit demselben Laser zu erzeugen. Eventuell kann ergänzend ein dritter Bereich der Substratoberfläche ebenfalls mit dem gleichen Laser bearbeitet werden. Beispielsweise kann die Substratoberfläche in dem dritten Bereich durch die Laserbearbeitung von einer oberflächlichen Schicht befreit werden. Insbesondere bei einem graphithaltigen Werkstoff mit einer Polymermatrix kann beispielsweise eine an der Oberfläche gebildete Polymerschicht durch eine Laserbearbeitung geöffnet bzw. abgetragen werden. Hierdurch kann insgesamt eine Prozessführung vereinfacht und/oder ein apparativer Aufwand verringert werden.

Insbesondere können gemäß einer konkretisierten Ausführungsform Laserparameter, mit denen der Laser beim Bearbeiten des zweiten und/oder dritten Bereichs der Oberfläche des Substrats betrieben wird, anders gewählt werden als beim Bearbeiten des ersten Bereichs der Oberfläche des Substrats.

Beispielsweise wurde erkannt, dass bei einer Verwendung von Laserparametern, die zu einer Bildung einer einen Lotuseffekt bewirkenden Oberflächentextur führen, der erste Bereich vorteilhaft stark hydrophob ausgebildet werden kann. Bei einer Verwendung anderer Laserparameter wurde hingegen beobachtet, dass sich Oberflächeneigenschaften schwächer hydrophob oder sogar hydrophil verändern. Beispielsweise wurde beobachtet, dass bei einer Bestrahlung mit sehr leistungsstarken, kurzen Laserpulsen ein graphithaltiger Werkstoff hydrophile Eigenschaften erhalten kann. Diesbezüglich wird von der Anmelderin der vorliegenden Anmeldung eine weitere Patentanmeldung mit dem Titel "Verfahren zum Ausbilden einer hydrophilen Oberfläche auf einem graphithaltigen Werkstoff und Verfahren zum Fertigen einer Bipolarplatte sowie Bipolarplatte und Brennstoffzelle bzw. Flussbatterie mit derselben" eingereicht. In dieser weiteren Patentanmeldung sind Details einer Laserbearbeitung beschrieben, wie sie auch bei Ausführungsformen der vorliegend beschriebenen Bipolarplatte bzw. deren Fertigung in gleicher oder ähnlicher Weise zum Einsatz kommen können. Der Inhalt der weiteren Anmeldung wird hierin durch Inbezugnahme vollumfänglich aufgenommen.

Bei Ausführungsformen der hierin vorgestellten Bipolarplatte kann ein Eindringen von Flüssigkeit bzw. Feuchtigkeit in Kanäle des Substrats verhindert werden. Hierdurch können beispielsweise Schäden durch expandierendes und gefrierendes Wasser vermieden werden. Es können kürzere Applikationszeiten beispielsweise zum Aufbringen eines Haftmittels zwischen zu verklebenden Teilsubstraten sowie ein geringerer Materialeinsatz möglich sein. Insgesamt können robustere Prozesse, aufgeweitete Toleranzsfelder, eine stabile Prozessfähigkeit, geringe Prozesskosten und/oder weniger Ausschuss erreicht werden.

Es wird darauf hingewiesen, dass hierin mögliche Merkmale und Vorteile von Ausführungsformen der Erfindung teils mit Bezug auf eine Bipolarplatte und teils mit Bezug auf ein Verfahren zum Fertigen einer Bipolarplatte beschrieben sind. Ein Fachmann wird erkennen, dass die für einzelne Ausführungsformen beschriebenen Merkmale in analoger und geeigneter Weise auf andere Ausführungsformen übertragen, angepasst und/oder ausgetauscht werden können, um zu weiteren Ausführungsformen der Erfindung und möglicherweise zu Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Figur 1 zeigt eine Draufsicht auf eine Bipolarplatte gemäß einer Ausführungsform der vorliegenden Erfindung.
Figur 2 zeigt eine Schnittansicht durch eine Bipolarplatte gemäß einer Ausführungsform der vorliegenden Erfindung.
Figur 3 zeigt eine Vergrößerung des in Figur 1 markierten Ausschnitts A.
Figur 4 zeigt eine Vergrößerung des in Figur 2 markierten Ausschnitts B.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

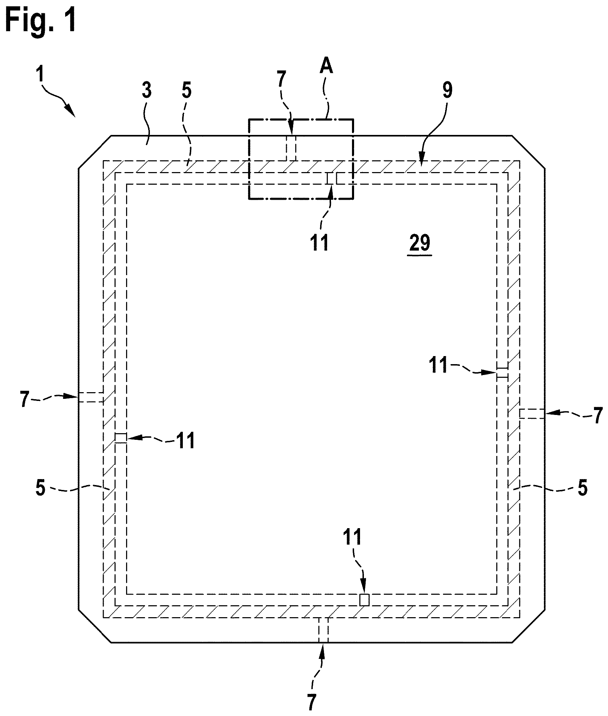

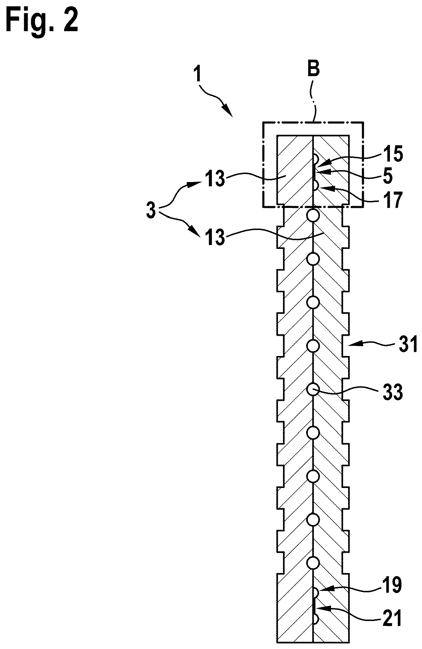

Figur 1 zeigt eine stark schematisierte Draufsicht einer Bipolarplatte 1, wie sie in einer Brennstoffzelle oder einer Flussbatterie verwendet werden kann. Figur 2 zeigt eine schematisierte Schnittansicht durch die Bipolarplatte 1.

Die Bipolarplatte 1 umfasst ein Substrat 3, welches beispielsweise aus einem graphithaltigen Werkstoff ausgebildet sein kann. In dem Substrat 3 erstreckt sich ein Kanal 5. Der Kanal 5 verläuft von einem Kanaleingang 7 hinein in ein Inneres 9 des Substrats 3. Im dargestellten Beispiel verläuft der Kanal 5 ringförmig und erstreckt sich dabei in der Nähe eines äußeren Umfangs der Bipolarplatte 3. Es sind hierbei mehrere Kanaleingänge 7 vorgesehen. Die Kanaleingänge 7 können als Öffnungen zur Ventilation des ringförmigen Bereichs des Kanals 5 dienen und verlaufen hin zu einem außenliegenden Rand des Substrats 3. Im dargestellten Beispiel sind weitere Öffnungen ausgebildet, die ebenfalls Kanaleingänge 7 oder alternativ als Kanalausgänge 11 bezeichnet werden können und die weg von dem außenliegenden Rand und hin zu einem Zentrum des Substrats 3 gerichtet sind.

Ein erster Bereich 19 der Oberfläche des Substrats 3 innerhalb des Kanals 5 ist derart behandelt bzw. ausgebildet, dass er stärker hydrophob ist als ein zweiter Bereich 21. Der erste Bereich 19 erstreckt sich dabei einerseits bis zu dem Kanaleingang 7 und umgibt den Kanaleingang 7 vorzugsweise ringförmig. Andererseits erstreckt sich der erste Bereich 19 innerhalb des Kanals 5 auch teilweise im Inneren 9 des Substrats 3, insbesondere dort, wo eine Innenoberfläche des Substrats innerhalb des Kanals 5 freiliegt, sodass Gas oder Dampf vom Kanaleingang 7 kommend bis zu diesem Teil des ersten Bereichs 19 gelangen kann. Ferner kann sich der erste Bereich 19 auch bis zu dem Kanalausgang 11 erstrecken und diesen ebenfalls vorzugsweise ringförmig umgeben.

Um die Bipolarplatte 1 zu fertigen, können zwei Teilsubstrate 13 bereitgestellt werden. In den Teilsubstraten 13 können in der Nähe des Außenumfangs der Teilsubstrate 13 mittels lokaler Vertiefungen Strukturen ausgebildet werden, die einerseits eine Klebefläche 15 und andererseits beidseits angrenzend an die Klebefläche 15 jeweils einen Überlaufkanal 17 bilden. Die Klebefläche 15 und die Überlaufkanäle umgeben einen zentralen Bereich der Bipolarplatte 1 ringförmig. Die Klebefläche 15 ist dabei als zweiter Bereich 21 mit geringerer Hydrophobie oder sogar Hydrophilie ausgebildet, wohingegen Oberflächen, die den Überlaufkanal 17 begrenzen, als erster Bereich 19 mit erhöhter Hydrophobie ausgebildet sind. An nach außen gerichteten Oberflächen weisen die Teilsubstrate 13 der Bipolarplatte 1 in deren zentralem Bereich Oberflächenstrukturen 31 auf, die beispielsweise zum gezielten Leiten von Reaktionsgasen dienen (lediglich in Fig. 2 angedeutet und in Fig. 1 zur besseren Übersichtlichkeit nicht veranschaulicht). An nach innen gerichteten Oberflächen weisen die Teilsubstrate 13 andere Oberflächenstrukturen auf, um beispielsweise innerhalb der Bipolarplatte 1 Kühlkanäle 33 auszubilden

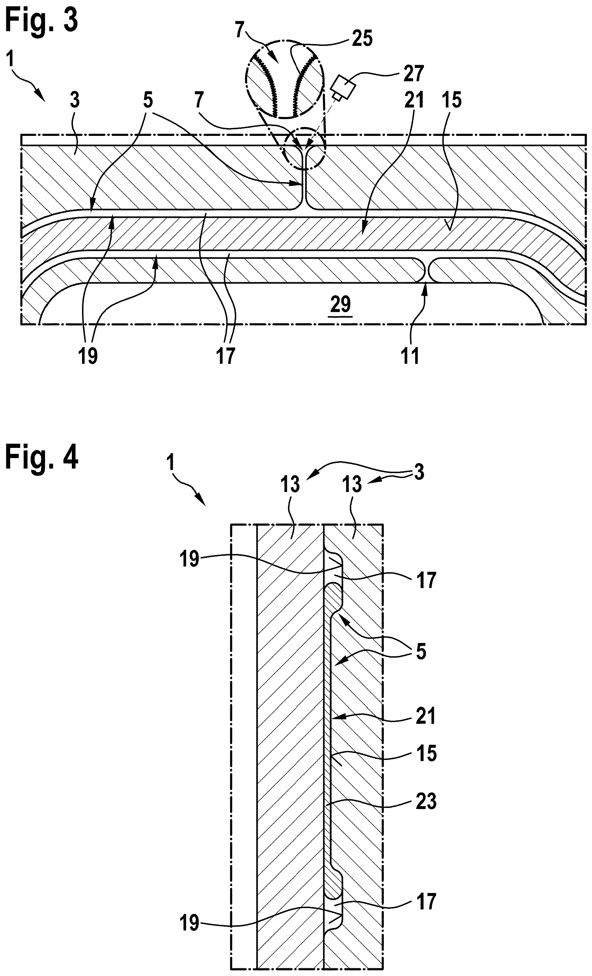

Die Oberfläche des Substrats 3 in dem ersten Bereich 19 kann beispielsweise mit einem Laser 27 bestrahlt werden. Laserparameter dieses Lasers 27 können dabei derart eingestellt sein, dass sich an der Oberfläche des ersten Bereichs 19 mikroskopische und/oder nanoskopische Strukturen einer Oberflächentextur 25 ausbilden, die einen Lotuseffekt und/oder einen chemischen und/oder physikalischen Effekt und damit eine starke Hydrophobie bewirken. In Fig. 3 ist eine solche Oberflächentextur 25 schematisch in einem lokal vergrößerten Ausschnitt symbolisiert.

Der zweite Bereich 21 kann entweder nicht mit dem Laser 27 bestrahlt werden oder es können andere Laserparameter eingestellt werden, die dazu führen, dass dieser zweite Bereich 21 schwächer hydrophobe oder hydrophile Eigenschaften ausbildet. Ähnlich kann auch einen dritter Bereich 29 mit dem Laser 27 unter Einstellung geeigneter Laserparameter bearbeitet werden, um dort beispielsweise gezielt stark hydrophile Eigenschaften zu bewirken.

Um die beiden Teilsubstrate 13 miteinander zu verbinden, wird zwischen die Klebeflächen 15 ein Haftmittel 23 beispielsweise in Form eines fließfähig verarbeitbaren Klebstoffs appliziert. Aufgrund der geringen Hydrophobie bzw. Hydrophilie des dort gebildeten zweiten Bereichs 21 kann dieses Haftmittel 23 stark an den Klebeflächen 15 anhaften. Beim Zusammenpressen der beiden Teilsubstrate 13 kann überschüssiges Haftmittel 23 seitlich bis in die Überlaufkanäle 17 strömen. Allerdings braucht das Haftmittel 23 hierbei nicht wie bei herkömmlich teilweise angewendeten Verfahren mit einem derart großen Überschuss appliziert werden, dass die gesamten Überlaufkanäle 17 bis hin zu dem Kanaleingang 7 mit Haftmittel 23 gefüllt werden, um den gesamten Kanal 5 abzudichten. Stattdessen können Teile der Überlaufkanäle 17 frei bleiben und somit deren innenliegende Oberfläche unbedeckt verbleiben. Der dort ausgebildete erste Bereich 19 kann dann aufgrund von dessen starker Hydrophobie dazu führen, dass an solchen freiliegenden Oberflächen innerhalb des Kanals 5 keine Feuchtigkeit angelagert werden kann, obwohl diese in Gaskommunikation mit dem Kanaleingang 7 verbunden sind. Frostschäden durch gefrierende Feuchtigkeit innerhalb des Kanals 5 können somit vermieden werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Bipolarplatte
- 3: Substrat
- 5: Kanal
- 7: Kanaleingang
- 9: Inneres des Substrats
- 11: Kanalausgang
- 13: Teilsubstrat
- 15: Klebefläche
- 17: Überlaufkanal
- 19: erster Bereich
- 21: zweiter Bereich
- 23: Haftmittel
- 25: Oberflächentextur
- 27: Laser
- 29: dritter Bereich
- 31: Oberflächenstrukturen
- 33: Kühlkanäle

## Patentansprüche

1. Bipolarplatte (1) für eine Brennstoffzelle oder eine Flussbatterie, wobei die Bipolarplatte (1) aufweist:
ein Substrat (3), und
einen Kanal (5), welcher sich von einem Kanaleingang (7) an einer Oberfläche des Substrats (3) in ein Inneres (9) des Substrats (3) erstreckt,
**dadurch gekennzeichnet, dass**
eine Oberfläche des Substrats (3) in einem ersten Bereich (19) innerhalb des Kanals (5) angrenzend an den Kanaleingang (7) stärker hydrophob ausgebildet ist als in einem zweiten Bereich (21), und
der erste Bereich (19) den Kanaleingang (7) ringförmig umgibt.

2. Bipolarplatte nach Anspruch 1,
wobei der erste Bereich (19) Teile der Oberfläche des Substrats (3) innerhalb des Kanals (5) umfasst, welche in Gaskommunikation mit dem Kanaleingang (7) verbunden sind.

3. Bipolarplatte nach einem der vorhergehenden Ansprüche,
wobei das Substrat (3) der Bipolarplatte (1) aus zwei plattenförmigen Teilsubstraten (13) zusammengesetzt ist,
wobei die zwei Teilsubstrate (13) entlang einer Klebefläche (15) miteinander verklebt sind,
wobei sich angrenzend an die Klebefläche (15) ein Überlaufkanal (17) erstreckt,
wobei der erste Bereich (19) sich zumindest entlang von Teilen des Überlaufkanals (17) erstreckt und
wobei der zweite Bereich (21) sich zumindest entlang von Teilen der Klebefläche (15) erstreckt.

4. Bipolarplatte nach einem der vorhergehenden Ansprüche,
wobei der Kanal (5) teilweise mit einem fließfähig verarbeitbaren Haftmittel (23) gefüllt ist,
wobei der erste Bereich (19) einen Anteil der Oberfläche innerhalb des Kanals (5) des Substrats (3) bildet, in dem das Haftmittel (23) nicht das Substrat (3) kontaktiert, und wobei der zweite Bereich (21) des Substrats (3) einen Anteil der Oberfläche innerhalb des Kanals (5) des Substrats (3) bildet, in dem das Haftmittel (23) das Substrat (3) kontaktiert.

5. Bipolarplatte nach Anspruch 4,
wobei der erste Bereich (19) sich innerhalb des Kanals (3) entlang einer gesamten Oberfläche des Substrats (3) erstreckt, in dem das Haftmittel (23) nicht das Substrat (3) kontaktiert.

6. Bipolarplatte nach einem der vorhergehenden Ansprüche,
wobei der erste Bereich (19) mittels eines Lasers (27) lokal bearbeitet ist, um eine lokal gesteigerte Hydrophobie auszubilden.

7. Bipolarplatte nach einem der vorhergehenden Ansprüche,
wobei der erste Bereich (19) eine einen Lotuseffekt bewirkende Oberflächentextur (25) aufweist.

8. Bipolarplatte nach einem der vorhergehenden Ansprüche,
wobei die Bipolarplatte (1) mit einem graphithaltigen Werkstoff ausgebildet ist.

9. Verfahren zum Fertigen einer Bipolarplatte (1) für eine Brennstoffzelle oder eine Flussbatterie, **dadurch gekennzeichnet, dass** das Verfahren umfasst:
Bereitstellen eines Substrats (3) mit einer Struktur derart, dass sich in der gefertigten Bipolarplatte (1) innerhalb des Substrats (3) ein Kanal (5) erstreckt, welcher sich von einem Kanaleingang (7) an einer Oberfläche des Substrats (3) in ein Inneres (9) des Substrats (3) erstreckt, und
Bearbeiten der Oberfläche des Substrats (3) in einem ersten Bereich (19) innerhalb des Kanals (5) angrenzend an den Kanaleingang (7) derart, dass die Oberfläche des Substrats (3) in dem ersten Bereich (19) stärker hydrophob ist als die Oberfläche des Substrats (3) in einem zweiten Bereich (21),
wobei der erste Bereich (19) den Kanaleingang (7) ringförmig umgibt.

10. Verfahren nach Anspruch 9,
wobei das Substrat (3) mit zwei plattenförmigen Teilsubstraten (13) bereitgestellt wird, wobei an den zwei plattenförmigen Teilsubstraten (13) eine Klebefläche (15) und angrenzend an die Klebefläche (15) ein Überlaufkanal (17) ausgebildet ist,
wobei der erste Bereich (19) sich zumindest entlang von Teilen des Überlaufkanals (17) erstreckt und
wobei der zweite Bereich (21) sich zumindest entlang von Teilen der Klebefläche (15) erstreckt,
wobei das Verfahren ferner ein Verkleben der zwei plattenförmigen Teilsubstrate (13) miteinander entlang der Klebefläche (15) umfasst.

11. Verfahren nach einem der Ansprüche 9 und 10,
wobei der erste Bereich (19) durch lokales Bestrahlen der Oberfläche des Substrats (3) mittels eines Lasers bearbeitet wird.

12. Verfahren nach Anspruch 11,
wobei das Verfahren ferner ein Bearbeiten des Substrats mit dem Laser (27) in dem zweiten Bereich (21) der Oberfläche des Substrats (3) und/oder in einem dritten Bereich (29) der Oberfläche des Substrats (3) umfasst.

13. Verfahren nach Anspruch 12,
wobei der Laser (27) beim Bearbeiten des zweiten und/oder dritten Bereichs (21, 29) der Oberfläche des Substrats (3) mit anderen Laserparametern betrieben wird als beim Bearbeiten des ersten Bereichs (19) der Oberfläche des Substrats (3).

14. Verfahren nach einem der Ansprüche 9 bis 13,
wobei der erste Bereich (19) der Oberfläche des Substrats (3) durch das Bearbeiten mit einer einen Lotuseffekt bewirkende Oberflächentextur (25) ausgebildet wird.

## Claims

1. Bipolar plate (1) for a fuel cell or a flow battery, wherein the bipolar plate (1) comprises:
a substrate (3), and
a channel (5) running from a channel entrance (7) at a surface of the substrate (3) into an interior (9) of the substrate (3),
**characterized in that**
a surface of the substrate (3) being more hydrophobic in a first area (19) inside the channel (5) adjacent to the channel entrance (7) than in a second area (21), and
the first area (19) annularly surrounds the channel entrance (7).

2. Bipolar plate according to claim 1,
wherein the first area (19) comprises parts of the surface of the substrate (3) inside the channel (5) that are in gas communication with the channel entrance (7).

3. Bipolar plate according to any of the preceding claims,
wherein the substrate (3) of the bipolar plate (1) is composed of two plate-shaped sub-substrates (13),
the two sub-substrates (13) being bonded together across a bonding surface (15),
and an overflow channel (17) running adjacent to the bonding surface (15),
the first area (19) running at least along parts of the overflow channel (17) and
the second area (21) running at least along parts of the bonding surface (15).

4. Bipolar plate according to any of the preceding claims,
wherein the channel (5) is partially filled with a flowably processable adhesive (23), the first area (19) forming a portion of the surface inside the channel (5) of the substrate (3) where the adhesive (23) is not in contact with the substrate (3), and
the second area (21) of the substrate (3) forming a portion of the surface inside the channel (5) of the substrate (3) where the adhesive (23) is in contact with the substrate (3).

5. Bipolar plate according to claim 4,
wherein the first area (19) runs inside the channel (3) along an entire surface of the substrate (3) where the adhesive (23) is not in contact with the substrate.

6. Bipolar plate according to any of the preceding claims,
wherein the first area (19) is locally treated by means of a laser (27) to provide a local increase in hydrophobicity.

7. Bipolar plate according to any of the preceding claims,
wherein the first area (19) has a surface texture (25) creating a lotus effect.

8. Bipolar plate according to any of the preceding claims,
wherein the bipolar plate (1) is formed with a graphite-containing material.

9. Method of manufacturing a bipolar plate (1) for a fuel cell or a flow battery, **characterized in that** the method comprises:
providing a substrate (3) having a structure such that a channel (5) runs inside the substrate (1) in the manufactured bipolar plate (1), the channel (5) running from a channel entrance (7) at a surface of the substrate (3) into an interior of (9) the substrate (3), and
treating the surface of the substrate (3) in a first area (19) inside the channel (5) adjacent to the channel entrance (7) such that the surface of the substrate (3) in the first area (19) is more strongly hydrophobic than the surface of the substrate (3) in a second area (21), wherein the first area (19) annularly surrounds the channel entrance (7).

10. Method according to claim 9,
wherein the substrate (3) is provided with two plate-shaped sub-substrates (13),
a bonding surface (15) being formed on the two plate-shaped sub-substrates (13) and an overflow channel (17) being formed adjacent to the bonding surface (15),
the first area (19) running at least along parts of the overflow channel (17), and the second area (21) running along at least parts of the bonding surface (15),
the method further comprising bonding the two plate-shaped sub-substrates (13) together across the bonding surface (15).

11. Method according to one of claims 9 and 10,
wherein the first area (19) is treated by locally irradiating the surface of the substrate (3) by means of a laser.

12. Method according to claim 11,
the method further comprising treating the substrate with the laser (27) in the second area (21) of the surface of the substrate (3) and/or in a third area (29) of the surface of the substrate (3).

13. Method according to claim 12,
wherein the laser (27) is operated with different laser parameters when treating the second and/or third area (21, 29) of the surface of the substrate (3) than when treating the first area (19) of the surface of the substrate (3).

14. Method according to one of claims 9 to 13,
wherein the first area (19) of the surface of the substrate (3) is formed by treating with a surface texture (25) producing a lotus effect.

## Revendications

1. Plaque bipolaire (1) pour une pile à combustible ou une batterie à flux redox, la plaque bipolaire (1) présentant :
un substrat (3), et
un canal (5), qui s'étend d'une entrée de canal (7) située sur une surface du substrat (3) à un intérieur (9) du substrat (3),
**caractérisée en ce que**
une surface du substrat (3) est réalisée plus hydrophobe dans une première région (19) à l'intérieur du canal (5), adjacente à l'entrée de canal (7), que dans une deuxième région (21), et
la première région (19) entoure l'entrée de canal (7) de manière annulaire.

2. Plaque bipolaire selon la revendication 1,
dans laquelle la première région (19) comprend des parties de la surface du substrat (3) à l'intérieur du canal (5) qui sont reliées à l'entrée de canal (7) par communication gazeuse.

3. Plaque bipolaire selon l'une des revendications précédentes,
dans laquelle le substrat (3) de la plaque bipolaire (1) est composé de deux parties de substrat (13) en forme de plaque,
dans laquelle les deux parties de substrat (13) sont collées l'une à l'autre le long d'une surface de collage (15),
dans laquelle un canal de trop-plein (17) s'étend de manière adjacente à la surface de collage (15),
dans laquelle la première région (19) s'étend au moins le long de parties du canal de trop-plein (17) et
dans laquelle la deuxième région (21) s'étend au moins le long de parties de la surface de collage (15).

4. Plaque bipolaire selon l'une des revendications précédentes,
dans laquelle le canal (5) est en partie rempli d'un adhésif (23) façonnable à l'état fluide,
dans laquelle la première région (19) forme une portion de la surface à l'intérieur du canal (5) du substrat (3) dans laquelle l'adhésif (23) n'est pas en contact avec le substrat (3), et dans laquelle la deuxième région (21) du substrat (3) forme une portion de la surface à l'intérieur du canal (5) du substrat (3) dans laquelle l'adhésif (23) est en contact avec le substrat (3).

5. Plaque bipolaire selon la revendication 4,
dans laquelle la première région (19) s'étend à l'intérieur du canal (3) le long d'une surface complète du substrat (3) dans laquelle l'adhésif (23) n'est pas en contact avec le substrat (3).

6. Plaque bipolaire selon l'une des revendications précédentes,
dans laquelle la première région (19) est usinée localement au moyen d'un laser (27) pour réaliser une hydrophobie localement accrue.

7. Plaque bipolaire selon l'une des revendications précédentes,
dans laquelle la première région (19) présente une texture de surface (25) produisant un effet lotus.

8. Plaque bipolaire selon l'une des revendications précédentes,
la plaque bipolaire (1) étant réalisée avec une matière contenant du graphite.

9. Procédé de production d'une plaque bipolaire (1) pour une pile à combustible ou une batterie à flux redox, **caractérisé en ce que** le procédé comprend :
la fourniture d'un substrat (3) avec une structure de telle manière que, dans la plaque bipolaire (1) produite, un canal (5) s'étend à l'intérieur du substrat (3), ledit canal s'étendant d'une entrée de canal (7) située sur une surface du substrat (3) à un intérieur (9) du substrat (3), et
l'usinage de la surface du substrat (3) dans une première région (19) à l'intérieur du canal (5), adjacente à l'entrée de canal (7), de telle manière que la surface du substrat (3) est plus hydrophobe dans la première région (19) que la surface du substrat (3) dans une deuxième région (21),
dans lequel la première région (19) entoure l'entrée de canal (7) de manière annulaire.

10. Procédé selon la revendication 9,
dans lequel le substrat (3) est fourni avec deux parties de substrat (13) en forme de plaque,
dans lequel une surface de collage (15) et, de manière adjacente à la surface de collage (15), un canal de trop-plein (17) sont réalisés sur les deux parties de substrat (13) en forme de plaque,
dans lequel la première région (19) s'étend au moins le long de parties du canal de trop-plein (17) et
dans lequel la deuxième région (21) s'étend au moins le long de parties de la surface de collage (15),
le procédé comprenant en outre un collage des deux parties de substrat (13) en forme de plaque l'une à l'autre le long de la surface de collage (15).

11. Procédé selon l'une des revendications 9 et 10,
dans lequel la première région (19) est usinée par irradiation locale de la surface du substrat (3) au moyen d'un laser.

12. Procédé selon la revendication 11,
le procédé comprenant en outre un usinage du substrat avec le laser (27) dans la deuxième région (21) de la surface du substrat (3) et/ou dans une troisième région (29) de la surface du substrat (3).

13. Procédé selon la revendication 12,
dans lequel, lors de l'usinage de la deuxième et/ou troisième région (21, 29) de la surface du substrat (3), le laser (27) fonctionne avec d'autres paramètres de laser que lors de l'usinage de la première région (19) de la surface du substrat (3).

14. Procédé selon l'une des revendications 9 à 13,
dans lequel, par l'usinage, la première région (19) de la surface du substrat (3) est réalisée avec une texture de surface (25) produisant un effet lotus.
